# FASCICULE DE BREVET EUROPEEN

(11) **EP 3 120 185 B1**
(45) Date de publication et mention de la délivrance du brevet: **19.05.2021**
(21) Numéro de dépôt: 15711189.9
(22) Date de dépôt: 20.03.2015
(51) Int. Cl.: G02C 3/00, G02C 5/12, A45C 11/04, G02C 5/00

(54) **BINOCLE**
KNEIFER
PINCE-NEZ

(30) Priorité: 21.03.2014 EP 14161199
(43) Date de publication de la demande: 25.01.2017
(73) Titulaire: Binoptics, 1180 Uccle (BE)
(72) Inventeur: RADO, M., Emmanuel, F-38000 Grenoble (FR); ALEX, M., Pierre, F-38000 Grenoble (FR)
(74) Mandataire: Sayettat, Julien Christian
(86) Numéro de dépôt international: PCT/EP2015/055995
(87) Numéro de publication internationale: WO 2015/140324

(56) Documents cités:
- WO-A1-2011/070095
- WO-A2-2012/069980
- FR-A1- 2 472 764
- US-A- 4 000 810
- US-A1- 2004 256 249
- US-A1- 2012 154 737

## Description

La présente invention se rapporte à un binocle moulé en une seule pièce comprenant une structure sensiblement plane qui présente une première bordure munie d'une première lentille et une deuxième bordure munie d'une deuxième lentille, ladite structure présentant un plan qui traverse lesdites première et deuxième bordures et lesdites première et deuxième lentilles, lesdites première et deuxième bordures étant prolongées l'une et l'autre par une jonction qui les relie l'une à l'autre, ladite jonction étant agencée pour être en contact avec un élément de maintien destiné à être posé sur le nez d'un utilisateur.

Un tel binocle est connu de l'état de la technique. Il ne présente pas de branches et est destiné à être posé sur le nez d'un utilisateur. De cette façon, le binocle prend appui uniquement sur le nez.

Il est connu que l'utilisation d'un tel binocle n'est pas pratique à l'usage puisque celui-ci n'est pas maintenu de manière stable sur le nez de l'utilisateur. De plus, lorsque l'utilisateur se déplace avec le binocle sur le nez, le binocle peut aisément basculer ou être déplacé lorsque l'utilisateur est en mouvement. Par conséquent, un tel binocle n'est pas pratique à l'usage car l'utilisateur est contraint de l'utiliser en étant le moins possible en mouvement, ce qui limite fortement l'utilisation d'un tel binocle.

Pour tenter d'améliorer le maintien du binocle sur le nez de l'utilisateur, il a été proposé de fournir un binocle dit « pince nez » qui est de fait inconfortable pour l'utilisateur qui doit supporter un pincement relativement intense. La qualité de confort d'un tel binocle est fortement limitée.

D'autres binocles ont été développés pour éviter les problèmes précités. L'utilisation d'un binocle a rapidement évolué vers l'ajout d'une branche sur un des côtés de la structure de façon à ce que l'utilisateur puisse maintenir la branche du binocle et ainsi maintenir le binocle sur son nez. Malheureusement, la maniabilité d'un tel binocle est limitée car, avec une telle configuration, l'utilisateur est contraint de maintenir le binocle lorsqu'il l'utilise pour lire. Il est évident qu'un tel binocle n'est ni confortable ni pratique à l'usage. Il existe également un binocle de nouvelle génération auquel est ajouté un élément de maintien. Un tel binocle est divulgué dans le document KR 2012 000 2025U qui décrit que l'élément de maintien est destiné à être posé sur le nez d'un utilisateur. Lorsque le binocle est posé sur le nez de l'utilisateur, celui-ci présente une face dorsale faisant face à l'utilisateur et une face frontale faisant face au milieu environnant. L'élément de maintien divulgué est fixé sur la face dorsale au niveau de la jonction desdites première et deuxième bordures. L'élément de maintien comprend deux éléments circulaires qui ne sont pas compris dans le plan de la structure du binocle. Les deux éléments circulaires présentent une première position dite « parallèle » et une deuxième position dite « d'ouverture ». Dans la première position, les deux éléments circulaires sont parallèles l'un par rapport à l'autre et dans la deuxième position, les deux éléments circulaires sont écartés l'un par rapport à l'autre, créant ainsi un espace libre.

L'utilisateur désirant fixer le binocle sur son nez doit écarter les deux éléments circulaires en deuxième position pour que le nez ait accès à l'espace créé. Ensuite, le passage de la deuxième position vers la première position permet de fixer le binocle, au moyen de l'élément de maintien, sur le nez.

Il ressort du document précité que le binocle avec l'élément de maintien n'est pas confortable lorsqu'il est posé sur le nez de l'utilisateur et ce à cause de la présence des deux éléments circulaires qui font saillies vers l'extérieur du binocle. En effet, l'utilisateur doit sans cesse écarter puis rapprocher les deux éléments circulaires pour espérer que le binocle tienne sur son nez. Une fois le binocle posé sur le nez, il n'est pas exclu que les deux éléments circulaires s'écartent une nouvelle fois et ne pincent alors plus suffisamment le nez de l'utilisateur. Le maintien et la stabilité d'un tel binocle sur le nez d'un utilisateur ne peut donc pas être garantie. La stabilité du binocle n'est donc pas assurée au moment où l'utilisateur se penche vers l'avant ou lorsqu'il est en mouvement. Or, comme décrit ci-dessus, il est préférable de pouvoir fournir un binocle qui soit confortable et stable pour que le binocle soit maintenu sur le nez, même lorsqu'un utilisateur est en mouvement. Le port d'un tel binocle n'est donc pas pratique et fiable à l'usage.

De plus, le mouvement de va-et-vient des deux éléments circulaires lors de l'utilisation use à long terme les deux éléments circulaires de l'élément de maintien divulgué dans le document KR 2012 000 2025U. La fiabilité d'un tel binocle ne peut donc pas être assurée sur une longue période de temps Un ensemble comprenant un binocle et un étui est décrit dans le document WO 2011/070095 A1.

Au vu de ce qui précède, l'utilisation d'un binocle semble à première vue difficile au vu des nombreuses limitations des binocles connus de l'état de la technique et pour lesquels les problèmes précités n'ont pas pu être contrecarrés jusqu'à maintenant.

A l'heure actuelle et au vu de ce qui précède, il est manifeste qu'il existe un réel besoin de fournir un binocle dont la fiabilité peut être assurée sur une plus longue période de temps par rapport aux binocles connus, qui présente une aisance de manipulation et ce sans porter atteinte à la stabilité du binocle sur le nez d'un utilisateur, même lorsque celui-ci est en mouvement. Cela permettra de rendre agréable et pratique le port d'un binocle.

L'invention a pour but de pallier les inconvénients de l'état de la technique en procurant un binocle qui soit aisément maniable, confortable à l'usage, qui est fiable par rapport aux binocles de l'état de la technique et dont le maintien sur le nez d'un utilisateur puisse être garantie à l'usage, même lorsque l'utilisateur est en mouvement.

Il est prévu suivant l'invention un ensemble tel que défini dans la revendication 1.

En particulier, la déformation de l'élément de maintien dans sa deuxième position est effectuée par rapprochement contraint de parties latérales par appui desdites parties sur des parois de l'emplacement.

Pour ce faire, les parois de l'emplacement et les parties latérales présentent des concavités complémentaires agencées pour sécuriser dans l'emplacement l'élément de maintien dans sa première position.

Le binocle et l'étui peuvent être agencés de sorte que le rangement du binocle dans l'étui soit effectué par translation relative entre ledit binocle et ledit étui, la déformation réversible de l'élément de maintien étant effectuée par rapprochement contraint de parties latérales dudit élément de maintien.

L'étui peut comprendre un premier logement avec une forme complémentaire à la forme de la première bordure munie de la première lentille, un deuxième logement avec une forme complémentaire à la forme de la deuxième bordure munie de la deuxième lentille, et un pont reliant les premier et deuxième logements l'un à l'autre, l'emplacement pour l'élément de maintien étant délimité entre les premier et deuxième logements et le pont.

Le binocle présente une première position prête à porter, dans laquelle le binocle est agencé pour être posé sur le nez d'un utilisateur, et une deuxième position dans laquelle l'élément de maintien est déformé dans sa position de rangement.

L'étui présente une première bordure et une deuxième bordure et un élément de jonction reliant lesdites première et deuxième bordures l'une à l'autre, lesdites première et deuxième bordures étant espacées l'une de l'autre par une distance d correspondant à la longueur de l'étui et étant agencées pour maintenir ledit binocle en deuxième position, lorsque ledit binocle est rangé dans ledit étui.

Cela a pour avantage de pouvoir ranger le binocle lorsque celui-ci est en deuxième position, c'est-à-dire lorsque les parties de l'élément de maintien se rapprochent l'un de l'autre. Ainsi, une fois rangé dans l'étui, l'élément de maintien est légèrement sous tension, ce qui permet de suffisamment maintenir le binocle dans l'étui.

Avantageusement, la longueur de l'étui est inférieure ou égale à celle du binocle en première position de telle façon que, lorsque le binocle en première position adopte la deuxième position, celui-ci peut être inséré dans ledit étui et ainsi être suffisamment maintenu.

La jonction est courbe et présente un premier et un deuxième points d'inflexion.

Ainsi, la présence des premier et deuxième points d'inflexion au niveau de la jonction permet de fournir un binocle avec une jonction courbe particulièrement flexible vu qu'à chaque point d'inflexion a lieu un changement de concavité. La flexibilité de la jonction permet d'ajuster l'écart nasal situé entre les première et deuxième lentilles, ce qui a pour avantage que le binocle puisse s'adapter à tout type de nez.

Il est ainsi possible de rapprocher les première et deuxième lentilles l'une par rapport à l'autre et ainsi les deux points d'inflexion l'un par rapport à l'autre de façon à réduire sensiblement l'écart nasal.

De plus, il a été constaté que la jonction présentant un premier et un deuxième points d'inflexion permet également d'éloigner les première et deuxième lentilles l'une par rapport à l'autre de façon à adapter une nouvelle fois l'écart entre les première et deuxième lentilles.

De plus, un tel binocle présente aussi l'avantage d'être plus robuste, car la flexibilité de la jonction lui permet d'adopter plusieurs orientations diminuant ainsi le risque de cassure.

Le binocle est ainsi aisément manipulable puisqu'il est aisé d'écarter ou de rapprocher les première et deuxième lentilles entre elles sans risquer une brisure du binocle.

De plus, le binocle est agencé pour être en contact avec un élément de maintien qui est destiné à être posé sur le nez de l'utilisateur.

La présence des premier et deuxième points d'inflexion permettent à l'élément de maintien de prendre prise sur la structure du binocle de façon réversible. Ainsi, une fois fixé audit binocle, l'élément de maintien est complètement intégré à la structure de celui-ci.

L'intégration de l'élément de maintien présentant une géométrie plane prédéfinie dans la structure du binocle permet à celui-ci de s'inscrire dans le plan de la structure du binocle. Etant donné que le plan de la structure passe aussi à travers lesdites première et deuxième bordures et lesdites première et deuxième lentilles, l'ajout de l'élément de maintien sur le binocle permet de confondre véritablement la géométrie plane prédéfinie de l'élément de maintien avec la structure du binocle. La géométrie plane du binocle est donc définie dans le plan de la structure du binocle.

Lorsque le binocle comprend l'élément de maintien, l'élément de maintien n'affecte pas ou très peu la position du centre de gravité du binocle. Cela a pour avantage que lors de la pose du binocle comprenant l'élément de maintien, il n'y a pas de contrepoids qui serait susceptible de réduire le maintien du binocle posé sur le nez de l'utilisateur.

Ainsi, le binocle permet d'offrir à l'utilisateur un confort à l'utilisation, une fiabilité et une maniabilité aisée.

Avantageusement, le binocle présente une première position prête à porter dans laquelle le binocle est agencé pour être posé sur le nez d'un utilisateur et dans laquelle la jonction est en position de repos, où les premier et deuxième points d'inflexion sont éloignés l'un de l'autre et une deuxième position dans laquelle ladite première bordure recouvre au moins partiellement ladite deuxième bordure et dans laquelle la jonction est en position de tension, où les premier et deuxième points d'inflexion sont rapprochés l'un de l'autre.

Cela permet de diminuer la taille du binocle et de le ranger en poche lorsqu'il adopte la deuxième position. De plus, l'écart nasal peut encore être adapté à souhait en orientant le binocle de la première position à la deuxième position.

En particulier, ladite jonction présente d'un côté du premier point d'inflexion une première partie de jonction et de l'autre côté du premier point d'inflexion une deuxième partie de jonction et d'un côté du deuxième point d'inflexion, ladite deuxième partie de jonction et de l'autre côté du deuxième point d'inflexion une troisième partie de jonction, lesdites première et troisième parties de ladite jonction présentant une concavité vers le haut, lorsque le binocle est en position prête à porter.

La jonction peut présenter trois parties successives courbes où les première et troisième parties présentent une concavité vers le haut ce qui permet d'encore augmenter la flexibilité de la jonction du binocle.

Cela a pour avantage que l'utilisateur peut ajuster l'écart nasal en plaçant ses doigts sur les première et troisième parties courbes qui présentent une concavité vers le haut, ce qui permet de définir une partie creuse pour les doigts de l'utilisateur.

De manière particulièrement avantageuse, la première partie de la jonction est reliée à la première bordure du binocle au moyen d'une de ses extrémités et la troisième partie de la jonction est reliée à la deuxième bordure du binocle au moyen d'une de ses extrémités.

En particulier, ladite première bordure munie de la première lentille entoure partiellement ladite première lentille et ladite deuxième bordure munie de la deuxième lentille entoure partiellement ladite deuxième lentille, lesdites première et deuxième bordures présentant une épaisseur au moins supérieure à celle desdites première et deuxième lentilles.

Cette caractéristique présente l'avantage de laisser une partie des première et deuxième lentilles libre pour éventuellement ajouter d'autres éléments de structure du binocle.

En particulier, les première et troisième parties de ladite jonction présentent chacune un rayon de courbure allant de 2 à 6 mm, de préférence de 3 à 5 mm, plus préférentiellement égal à 3 mm.

De plus, une jonction avec au moins une partie concave vers le bas est particulièrement favorable à la flexibilité de la jonction du binocle, ce qui est préféré dans le cadre de la présente invention.

De préférence, ladite deuxième partie de ladite jonction présente une concavité vers le bas ce qui permet de fournir une surface de contact pour un élément de maintien.

De plus, dans une forme de réalisation particulière, ladite deuxième partie de ladite jonction présente un rayon de courbure allant de 1 à 3 cm, de préférence de 1 ,5 à 2,5 cm, plus préférentiellement de 1 ,5 à 2 cm, ce qui permet d'ajuster la courbure des première et troisième parties de la jonction.

De manière préférentielle, lesdites première et deuxième lentilles ou les première et deuxième bordures sont chacune munies de moyens de liaison agencés pour engager ledit élément de maintien audit binocle, ce qui permet de fixer un élément de maintien à la structure du binocle.

De préférence, lesdits moyens de liaison sont choisis dans le groupe constitué d'ailettes, de protubérances, de préférence de protubérances rigides, comme des protubérances présentant la forme de boutons ou de champignons et de leurs combinaisons.

De préférence, la structure du binocle, la première lentille et la deuxième lentille sont réalisées à partir d'un même matériau.

Encore plus préférentiellement, ledit binocle selon l'invention est en matière choisie dans le groupe constitué d'élastomères, de préférence du polycarbonate, du polyuréthane, du verre ou de leurs combinaisons.

De préférence, ladite jonction présente une largeur comprise entre 1 et 8 mm et une épaisseur comprise entre 0,05 et 1 ,5 mm.

En particulier, l'élément de maintien présente une forme courbe et comprend un premier et un deuxième points d'inflexion.

De manière avantageuse, l'élément de maintien présente d'un côté du premier point d'inflexion une première partie et de l'autre côté du premier point d'inflexion une deuxième partie et d'un côté du deuxième point d'inflexion ladite deuxième partie, et de l'autre côté du deuxième point d'inflexion une troisième partie, lesdites première et troisième parties présentant une concavité vers le haut et ladite deuxième partie une concavité vers le bas.

Ainsi, la forme de l'élément de maintien est adaptée à la forme de la jonction du binocle de telle façon que sa fixation au binocle est rendue aisée.

De manière préférentielle, l'élément de maintien comprend cinq parties courbes où les première, deuxième et troisième parties sont agencées pour être respectivement en contact avec des première, deuxième et troisième parties de la jonction du binocle et où les quatrième et cinquième parties sont agencées pour être fixées audit binocle au moyen de moyens de liaisons.

Cela a pour avantage que plusieurs parties de l'élément de maintien sont susceptibles d'être fixées au binocle.

De préférence, l'élément de maintien est fait en matière choisie dans le groupe constitué d'élastomères, de préférence du polycarbonate, du polyuréthane, du silicone, plus préférentiellement d'élastomères thermoplastiques ou de leurs combinaisons.

D'autres formes de réalisation de l'étui suivant l'invention sont indiquées dans les revendications annexées. D'autres caractéristiques, détails et avantages de l'invention ressortiront de la description donnée ci-après, à titre non limitatif et en faisant référence aux dessins annexés.
La figure 1 est une vue en plan d'un binocle comprenant un élément de maintien selon la présente invention.
La figure 2 est une vue en perspective d'un binocle et d'un élément de maintien selon l'invention.
La figure 3 illustre une variante d'un binocle selon l'invention.
La figure 4 est une vue schématique du binocle illustré à la figure 3 lorsque la jonction est en position de tension.
La figure 5 représente un étui suivant la présente invention et un binocle muni d'un élément de maintien selon l'invention.
La figure 6 représente l'étui illustré à la figure 5 lorsqu'il contient le binocle avec son élément de maintien selon la présente invention.
La figure 7 représente un binocle selon un mode préféré de la présente invention.
La figure 8 représente une partie de l'étui selon l'invention.

Sur les figures, les éléments identiques ou analogues portent les mêmes références.

Dans le cadre de la présente invention, l'expression « partie présentant une concavité vers le haut » doit être comprise comme signifiant que la partie concernée présente un fond orienté vers le bas et une ouverture orientée vers le haut.

Dans le cadre de la présente invention, l'expression « partie présentant une concavité vers le bas » doit être comprise comme signifiant que la partie concernée présente un fond orienté vers le haut et une ouverture orientée vers le bas.

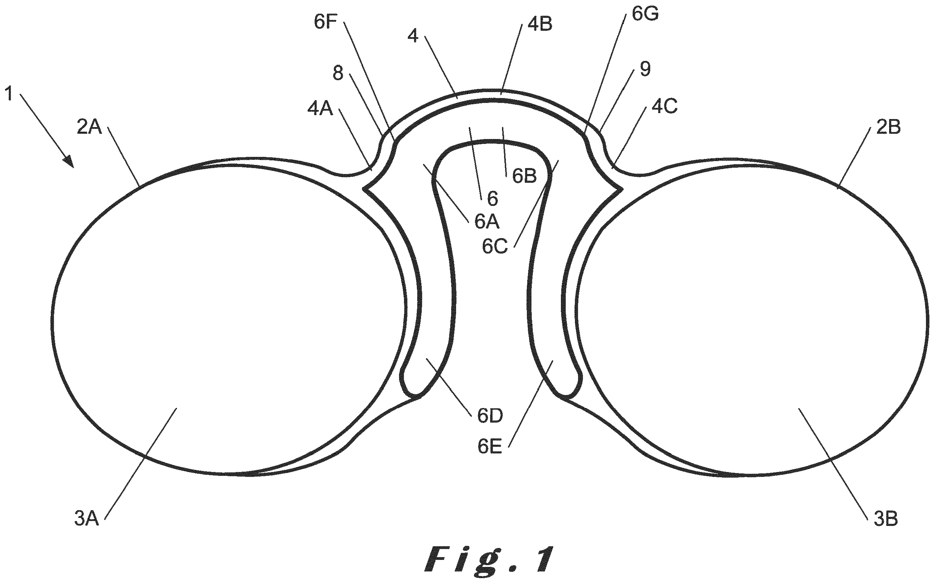

Dans le cadre de la présente invention, il faut entendre par «écart nasal » la distance qui est située entre la première lentille et la deuxième lentille, à hauteur de la jonction. La structure du binocle 1 , illustrée à la figure 1 , comprend une première bordure 2A et une deuxième bordure 2B qui sont prolongées par une jonction 4 qui les relie l'une à l'autre. La jonction 4 est en contact avec un élément de maintien 6 qui est prévu pour être posé sur le nez d'un utilisateur.

Les première et deuxième bordures 2A, 2B du binocle 1 sont logiquement munies de lentilles 3A, 3B. La première bordure 2A entoure partiellement ladite première lentille 3A et la deuxième bordure 2B entoure partiellement ladite deuxième lentille 3B.

Les parties des première et deuxième bordures 2A, 2B qui sont en contact avec l'élément de maintien 6 présentent une épaisseur au moins supérieure à celle desdites première et deuxième lentilles 3A, 3B.

Comme représenté à la figure 1 , la jonction 4 du binocle 1 est courbe et présente deux points d'inflexion 8, 9 qui confèrent au binocle 1 une flexibilité avantageuse. Cela permet au binocle 1 selon l'invention d'adopter plusieurs orientations.

Plus précisément, la jonction 4 présente d'un côté du premier point d'inflexion 8 une première partie de jonction 4A reliée à la première bordure 2A et de l'autre côté du premier point d'inflexion 8 se situe une deuxième partie de jonction 4B qui prolonge ladite première partie 4A de la jonction 4 du binocle 1.

De plus, la jonction 4 comprend également d'un côté du deuxième point d'inflexion 9, la deuxième partie de jonction susdite 4B et de l'autre côté du deuxième point d'inflexion 9 une troisième partie de jonction 4C qui est reliée à la deuxième bordure 4C.

Lesdites première et troisième parties 4A, 4C de ladite jonction 4 présentent une concavité vers le haut, lorsque le binocle 1 est en position prête à porter, ce qui correspond à une position où les deux points d'inflexion sont éloignés l'un de l'autre, comme illustré à la figure 1.

Ladite deuxième partie 4B de ladite jonction 4 présente une concavité vers le bas. Ainsi, le passage entre la première partie 4A de jonction 4 vers ia deuxième partie 4B de jonction 4 définit le premier point d'inflexion 8 où a donc lieu Se changement de concavité et le passage de la deuxième partie 4B de jonction 4 vers la troisième partie 4C de jonction définit le deuxième point d'inflexion 9.

Selon le mode de réalisation illustré à la figure 1 , le binocle est dans une première position appelée « position prête à porter », ce qui correspond à une position de repos de la jonction 4 où les premier et deuxième points d'inflexion 8, 9 sont éloignés l'un de l'autre. Dans cette position, l'utilisateur n'a plus qu'à placer le binocle sur son nez.

De manière avantageuse, la flexibilité du binocle 1 selon l'invention permet à l'utilisateur d'éloigner s'il le souhaite encore les premier et deuxième points d'inflexion 8, 9 l'un par rapport à l'autre. De cette façon, il peut écarter les première et deuxième bordures 2A, 2B pour faciliter son placement sur le nez.

Comme on peut l'apercevoir sur la figure 1 , les première et troisième parties 4A, 4C de la jonction 4 peuvent permettre à l'utilisateur de placer ces doigts dans le creux ainsi formé pour maintenir le binocle 1 aisément.

De manière encore avantageuse, les première et troisième parties 4A, 4C de ladite jonction 4 présente un rayon de courbure allant de 2 à 6 mm, de préférence de 3 à 5 mm, plus préférentiellement égal à 3 mm.

Préférentiellement, ladite deuxième partie 4B de ladite jonction 4 présente un rayon de courbure allant de 1 à 3 cm, de préférence de 1 ,5 à 2,5 cm, plus préférentiellement de 1 ,5 à 2 cm

La structure du binocle 1 peut être réalisée en matière souple ou rigide. De préférence, la structure peut être réalisée en élastomères, par exemple en polycarbonate, en polyuréthane. Il est également possible de fournir la structure du binocle 1 en verre ou en toute autre matière permettant de fournir une structure de binocle 1.

La structure de binocle 1 peut être réalisée en faisant appel à tout procédé connu permettant de fabriquer une telle structure, par exemple par une technique de mono-injection qui permet de fournir directement la structure du binocle 1 ou par une technique d'injection qui permet de fabriquer la structure du binocle 1 sans les lentilles 3A, 3B, ces dernières pouvant être ajoutées dans un second temps. Ainsi, la structure du binocle 1, la première lentille 3A et la deuxième lentille 3B peuvent être réalisées à partir d'un même matériau, ou plusieurs matières peuvent être combinées entre elles pour fournir la structure du binocle 1.

La structure du binocle est ainsi moulée en une seule pièce ce qui facilite grandement son procédé de fabrication.

Un mode de réalisation avantageux consiste à fabriquer une structure en polycarbonate sur laquelle sont fixés des verres. Il est aussi possible de fournir un binocle comprenant un élément de maintien entièrement en silicone.

L'élément de maintien 6, illustré à la figure 1, présente une géométrie plane prédéfinie telle qu'il peut être fixé à la structure du binocle 1 selon l'invention de façon à fournir un binocle 1 stable, fiable et confortable à l'usage.

Dans ce mode préféré, l'élément de maintien prend prise au niveau de la jonction 4 et des première et deuxième bordures 2A, 2B du binocle 1.

Comme il apparaît à la figure 1, l'élément de maintien 6 présente une forme courbe et comprend un premier et un deuxième points d'inflexion 6F, 8G. A chaque point d'inflexion 8F, 6G correspond un changement de concavité qui présente ainsi le même avantage que le binocle, en l'occurrence une flexibilité avantageuse qui lui permet de supporter une éventuelle déformation.

L'élément de maintien 8 selon ce mode de réalisation comprend 5 parties successives courbes : une première partie 8A, une deuxième partie 6B, une troisième partie 6C, une quatrième partie 6D et une cinquième partie 6E. La première partie 6A et la troisième partie 6C de l'élément de maintien présentent une concavité vers le haut et la deuxième partie 6B de l'élément de maintien 8 présente une concavité vers le bas.

Les première, deuxième et troisième parties 6A, 6B, 6C coopèrent respectivement avec les première, deuxième et troisième parties 4A, 4B, 4C de la jonction 4 du binocle 1 où elles peuvent prendre prise.

Les quatrième et cinquième parties 6D, 6E de l'élément de maintien 6 sont fixées respectivement aux première et deuxième bordures 2A, 2B du binocle 1.

L'élément de maintien 6 est fait en matière choisie dans le groupe constitué d'élastomères, de préférence du polycarbonate, du polyuréthane, du silicone, plus préférentiellement d'élastomères thermoplastiques ou de leurs combinaisons.

Ainsi l'élément de maintien 8 peut présenter la même matière que la structure du binocle 1. Toutefois, l'élément de maintien 6 est avantageusement fabriqué dans une matière plus souple que la structure du binocle 1 pour améliorer le confort du port du binocle 1 porté au moyen de l'élément de maintien 6, qui est prévu pour être posé sur le nez de l'utilisateur.

Selon la présente invention, il est particulièrement avantageux de pouvoir fournir un élément de maintien 6 formé d'une seule pièce de façon à faciliter sa mise en œuvre, son intégration dans la structure du binocle 1 et son remplacement. Préférentiellement, l'élément de maintien 6 peut être fixé au niveau de la jonction 4, sur les première et deuxième lentilles 3A, 3B, ou sur la jonction 4 et les première et deuxième lentilles 3A, 3B.

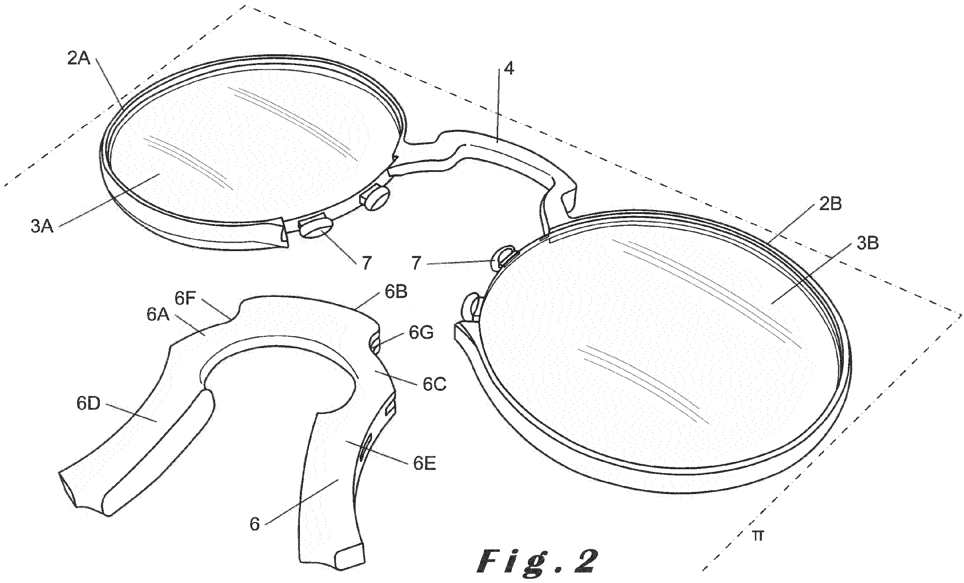

De manière avantageuse, la jonction 4 selon l'invention présente une largeur comprise entre 1 et 8 mm et une épaisseur comprise entre 0,05 et 1 ,5 mm. La figure 2 est une illustration en perspective d'un binocle 1 selon la présente invention et d'un élément de maintien 6 selon l'invention.

La structure du binocle comprend tous les éléments présentés pour le binocle illustré à la figure 1 excepté que des moyens de liaisons 7 sont présents sur les première et deuxième lentilles 3A, 3B et que les première et deuxième bordures 2A, 2B entourent par conséquent différemment les première et deuxième lentilles 3A, 3B.

Ladite première bordure 2A du binocle 1 munie de la première lentille 3A entoure cette dernière partiellement et ladite deuxième bordure 2B du binocle 1 munie de la deuxième lentille 3B entoure partiellement ladite deuxième lentille 3B. De cette façon, une partie du bord de la première lentille 3A fait face à une partie du bord de la deuxième lentille 3B, à hauteur de la jonction 4 du binocle.

Cela permet de laisser un espace libre pour deux moyens de liaison 7 disposés sur la première et la deuxième lentilles 3A, 3B.

De plus, lesdites première et deuxième bordures 2A, 2B présentent une épaisseur au moins supérieure à celle desdites première et deuxième lentilles 3A, 3B.

Les moyens de liaison 7 se présentent sous la forme de boutons présentant une tête arrondie et une base reliant la tête à la lentille correspondante.

L'élément de maintien 6 présente la même structure que celle décrite pour l'élément de maintien représenté à la figure 1.

Dans ce mode de réalisation, on peut apercevoir que l'élément de maintien 6 présente plusieurs orifices prévus pour être engagés au niveau des boutons.

Lorsque l'élément de maintien 6 est positionné sur la jonction 4 du binocle 1, les orifices sont positionnés face aux boutons qui sont alors enfilés dans les orifices, en forçant le passage de la tête de telle façon que les bases soient logés dans les orifices et que les têtes de section plus importantes assurent le positionnement de l'élément de maintien 6 au binocle 1. De cette façon, la forme des boutons permet de légèrement déplacer l'élément de maintien 6 de l'avant vers l'arrière, et inversement, relativement au binocle 1, ce qui améliore encore le positionnement du binocle sur le nez d'un utilisateur.

Il ressort de la figure 2 qu'un plan π traverse la structure du binocle 1 et également les première et deuxième bordures 2A, 2B et les première et deuxième lentilles 3A, 3B. Cette figure illustre le fait que l'élément de maintien 6 s'inscrit dans le plan π de la structure du binocle 1 de telle façon que celui-ci est idéalement intégré dans la structure du binocle 1. Cela permet de fournir un binocle 1 qui comprend un élément de maintien 6 dont le poids est symétriquement réparti dans sa structure. Ainsi, la position du centre de gravité du binocle 1 n'est pas affectée par la présence de l'élément de maintien 8.

L'illustration de la figure 2 permet de mettre en lumière une façon dont le produit peut se présenter une fois mis sur le marché pour sa mise en vente. Les composants du binocle 1, en l'occurrence la structure du binocle 1 et l'élément de maintien 6, peuvent être fournis séparément. De cette façon, l'utilisateur peut alors simplement fixer l'élément de maintien 6 au niveau de la jonction 4 où il peut prendre prise dans la structure du binocle 6 pour former ainsi un binocle 1 prêt à être porté.

Il est bien entendu que les moyens de liaison peuvent avoir tout autre forme comme par exemple celle choisie dans le groupe constitué d'ailettes, de protubérances comme présentant la forme de champignons ou de leurs combinaisons.

De manière avantageuse, les moyens de liaison 7 peuvent être sous forme de boutons, de préférence au nombre de deux qui présentent une tête arrondie et une base de section inférieure à celle de la tête arrondie.

Lorsque les moyens de liaisons 7 sont constitués d'ailettes et de boutons, le déplacement de l'élément de maintien 7 est encore plus limité de l'avant vers l'arrière par rapport au binocle 1. De plus, la présence d'ailette permet de guider l'élément de maintien 6 lorsqu'il est fixé à la structure du binocle 1 et les boutons permettent de le maintenir en position.

Le binocle 1 ainsi développé est aisément maniable, stable sur le nez de l'utilisateur, fiable et confortable à l'usage.

Il est bien entendu que l'élément de maintien (6) peut être fixé sur la structure du binocle 1 de manière réversible ce qui permet de le remplacer aisément. Ce remplacement est aisément et rapidement réalisable puisqu'il suffit de déloger l'élément de maintien 6 des moyens de liaisons 7. Ainsi, lorsque l'utilisateur désire changer de style de binocle, il peut simplement remplacer l'élément de maintien 6 par un autre.

L'élément de maintien 6 peut se présenter en plusieurs coloris (bleu, rose, jaune, vert, rouge, noir, etc.) de façon à ce que l'utilisateur puisse avoir le choix de la couleur de l'élément de maintien 6. Ainsi, le binocle 1 peut présenter au moins deux déclinaisons de couleurs, de préférence une série de couleurs.

De préférence, l'élément de maintien 6 peut être fourni sous différentes tailles, par exemple trois tailles différentes, pour laisser le choix à l'utilisateur de sélectionner l'élément de maintien 6 qui convient à la taille du nez de l'utilisateur. Notons que dans le cadre de la présente invention, les structures du binocle 1 et de l'élément de maintien 6 selon l'invention permettent avantageusement de s'adapter à tout type de nez grâce à la flexibilité et à la maniabilité du binocle qui peut donc présenter plusieurs orientations.

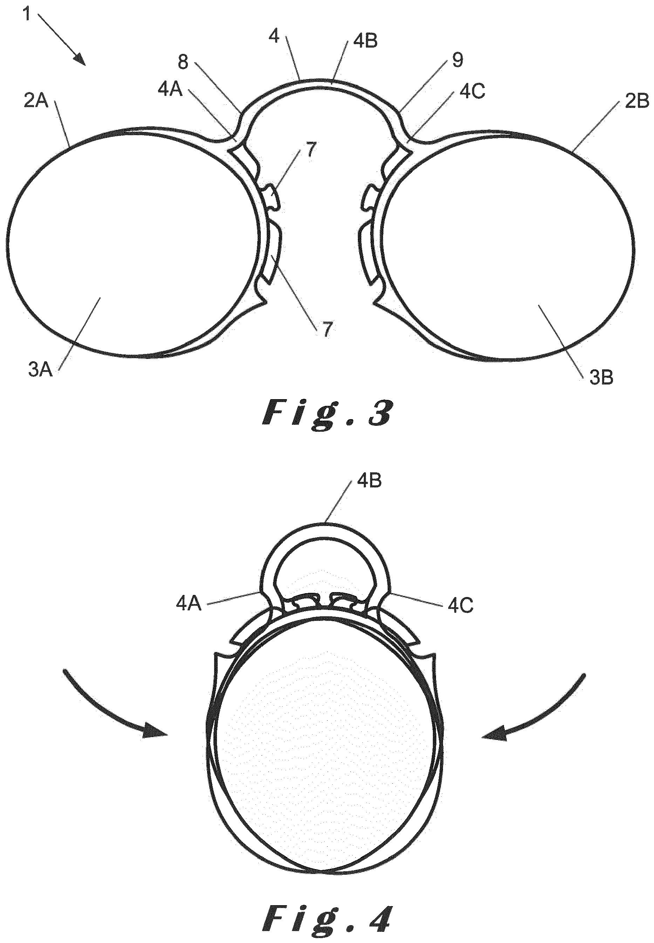

La figure 3 illustre une variante de binocle 1 selon l'invention qui présente tous les éléments décrits du binocle 1 illustré à la figure 1, excepté que les moyens de liaison 7 sont différents.

Le binocle 1 illustré est dans une première position prête à porter dans laquelle le binocle 1 est agencé pour être posé sur le nez d'un utilisateur. Dans cette première position du binocle 1, la jonction 1 est en position de repos et les premier et deuxième points d'inflexion 8, 9 sont éloignés l'un de l'autre.

Dans ce mode de réalisation, les moyens de liaison 7 sont au nombre de six et se présentent sous la forme de quatre ailettes et de deux boutons.

Les ailettes 4 facilitent le guidage de l'élément de maintien 6 et limitent le mouvement de celui-ci de l'avant vers l'arrière, et inversement, relativement au binocle.

Les boutons permettent d'engager l'élément de maintien 6 et de le maintenir en positon.

La structure du binocle 1 est de préférence en polycarbonate 1 et l'élément de maintien 6 en silicone.

La figure 4 illustre un mode préféré du binocle 1 de la figure 3 lorsqu'il est dans une deuxième position. Comme illustré, le binocle 1 est dans une position dans laquelle la première bordure 2A recouvre au moins partiellement la deuxième bordure 2B et dans laquelle la jonction 4 est en position de tension où les premier et deuxième points d'inflexion 8, 9 sont rapprochés l'un de l'autre.

Plus précisément, dans ce mode de réalisation, la première bordure 2A s'inscrit dans un premier plan et la deuxième bordure 2B s'inscrit dans un deuxième plan. Les premier et deuxième plans étant parallèles l'un à l'autre.

La jonction 4 du binocle 4 en position de tension s'inscrit dans un troisième plan qui est sécant par rapport aux premier et deuxième plans.

Dans cette forme de réalisation, le binocle 1 selon l'invention peut être rangé dans cette position, par exemple dans une poche d'un utilisateur, ce qui est particulièrement avantageux.

De plus, lorsque le binocle 1 adopte la deuxième position et que la jonction 4 est en position de tension, il a été constaté que l'écart nasal entre les première et deuxième lentilles 3A, 3B est réduit. Ainsi, le passage de la deuxième position vers la première position du binocle 1 selon l'invention permet d'ajuster l'écart nasal à souhait.

Le binocle 1 illustré peut également comprendre un élément de maintien 6 selon l'invention et présenter les première et deuxième positions.

L'élément de maintien 6 peut être fait en matière choisie dans le groupe constitué d'élastomères, de préférence du polycarbonate, du polyuréthane, du silicone, plus préférentiellement d'élastomères thermoplastiques ou de leurs combinaisons.

La matière de l'élément de maintien 6 présente un coefficient d'élasticité tel qu'il permette de rapprocher les premier et deuxième points d'inflexion 6F, 6G l'un à l'autre, lorsque le binocle 1 adopte la deuxième position de sorte que la jonction 4 du binocle 1 s'oriente dans la position de tension. En d'autres termes, le binocle 1 présente une première position prête à porter, dans laquelle le binocle 1 est agencé pour être posé sur le nez de l'utilisateur, et une deuxième position dans laquelle l'élément de maintien 6 est déformé dans sa position de rangement. De plus et de manière avantageuse, l'élément de maintien 6 présente un coefficient d'élasticité tel qu'il contribue au maintien du binocle 1 dans la première position où la jonction 4 est dans la position de repos.

De manière avantageuse, le binocle 1 suivant l'invention présente une première position dans laquelle la jonction 4 est en position de repos où les premier et deuxième points d'inflexion 8,9 sont éloignés l'un de l'autre. Le binocle 1 suivant l'invention présente également une deuxième position dans laquelle la jonction 4 est en position de tension où les premier et deuxième points d'inflexion 8,9 sont rapprochés l'un de l'autre.

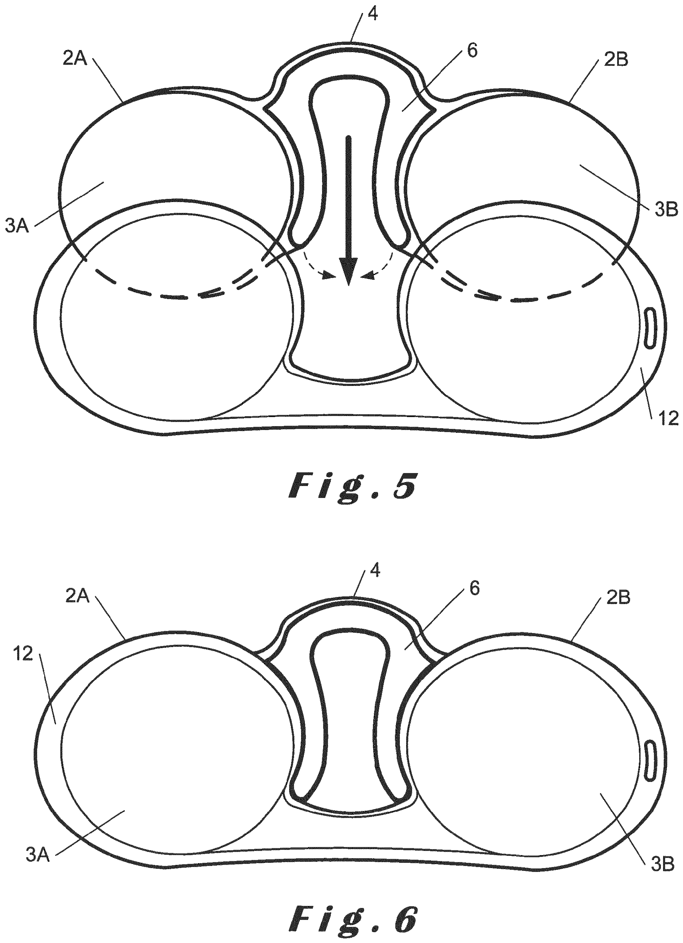

Les figures 5 et 6 illustrent le binocle 1 muni de l'élément de maintien 6 représenté à la figure 1 et un étui 12 selon l'invention.

L'élément de maintien 6 fixé à la jonction 4 est élastiquement déformable entre une position de rangement, dans laquelle les parties 6A, 6C, 6D, 6E sont écartées l'une de l'autre (figures 5 et 6), et une position de tension, dans laquelle les parties 6A, 6C, 6D, 6E sont rapprochées par contrainte l'une de l'autre.

L'étui 12 comprend un emplacement destiné au rangement de l'élément de maintien 6 fixé à la jonction 4. En particulier, sur les figures 5, 6, l'étui 12 comprend un premier logement avec une forme complémentaire à la forme de la première bordure 2A munie de la première lentille 3A, un deuxième logement avec une forme complémentaire à la forme de la deuxième bordure 2B munie de la deuxième lentille 3B, et un pont reliant les premier et deuxième logements l'un à l'autre, l'emplacement pour l'élément de maintien 6 étant délimité entre les premier et deuxième logements et le pont.

Le binocle 1 et l'emplacement sont agencés de sorte que, lors du rangement de l'élément de maintien 6 dans ledit emplacement, ledit élément de maintien est déformé réversiblement depuis sa première position vers sa deuxième position pour sécuriser l'élément de maintien 6 dans sa première position dans l'emplacement, et ainsi sécuriser le binocle 1 dans l'étui 12.

Comme représenté par les flèches sur la figure 5, le binocle 1 et l'étui 12 sont agencés de sorte que le rangement du binocle 1 dans l'étui 12 soit effectué par translation relative entre ledit binocle et ledit étui. En outre, les flèches courbes montrent que la déformation réversible de l'élément de maintien 6 dans sa deuxième position est effectuée par rapprochement contraint de parties latérales 6D, 6E dudit élément de maintien, ledit rapprochement contraint étant initié par appui desdites parties sur des parois des logements qui délimitent latéralement l'emplacement.

En particulier, comme représenté sur les figures, les parois latérales de l'emplacement et les parties latérales 6D, 6E de l'élément de maintien 6 présentent des concavités complémentaires agencées pour sécuriser dans l'emplacement l'élément de maintien 6 dans sa première position.

La longueur du binocle 1 est définie comme étant la distance située entre les extrémités les plus éloignés du binocle en première position, dans le sens de la longueur du binocle 1. De manière préférentielle, le binocle présente une longueur comprise entre 8 et 11 cm, de préférence de 9 cm, plus préférentiellement de 9,8 cm.

Selon un mode de réalisation, l'étui 16 présente une longueur inférieure ou égale à celle du binocle 1.

De cette façon, l'utilisateur désirant ranger le binocle 1 selon la présente invention peut maintenir le binocle 1 en première position au niveau des première et troisième parties 4A, 4C de jonction 4 et ensuite rapprocher légèrement les deux points d'inflexion 8,9 l'un vers l'autre pour réduire la longueur du binocle 1 et permettre l'insertion aisée de celui-ci dans l'étui 16 selon l'invention. Ainsi, le binocle 1 adopte alors la deuxième position dans laquelle la jonction 4 est légèrement sous tension et les premier et deuxième points d'inflexion sont sensiblement proche l'un de l'autre.

La figure 6 illustre l'étui 18 de la figure 5 comprenant le binocle de la figure 5 avec l'élément de maintien 6.

Lorsque le binocle 1 est logé dans l'étui 16 selon la présente invention, toute sa structure est logée dans l'étui 16 sauf la jonction 4 et l'élément de maintien 6 qui restent visibles.

De cette façon, pour retirer le binocle 1 de l'étui 16, il suffit de saisir le binocle 1 au niveau de la jonction 4, de préférence au niveau des première et troisième parties 4A, 4C de jonction 4.

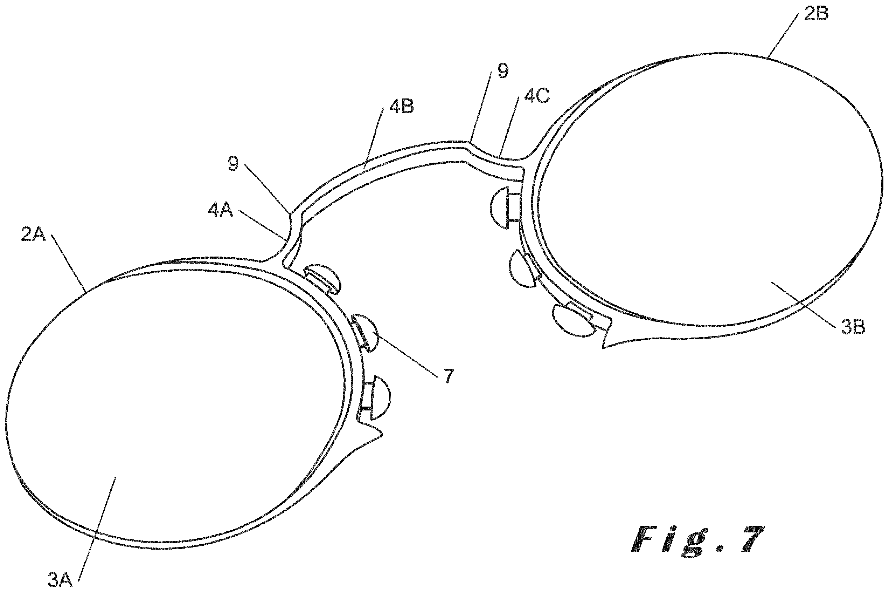

La figure 7 illustre le binocle 1 illustré à la figure 3 et comprend donc tous les éléments qui ont été décrits pour cette figure excepté que les moyens de liaison 7 se présentent sous forme de 6 boutons disposés sur les première et deuxième bordures 2A, 2B.

Il a été constaté que ce mode de réalisation permet de maintenir suffisamment l'élément de maintien 6 sans trop limiter son mouvement de l'avant vers l'arrière, et inversement, relativement au binocle 1. Cela est avantageux pour l'utilisateur car le binocle 1 selon l'invention présente une maniabilité améliorée par rapport à l'état de la technique.

La mise en vente du binocle 1 selon l'invention consistera de préférence à fournir un binocle 1 et au moins trois éléments de maintien 6 de différentes couleurs. De cette façon, l'utilisateur pourra choisir l'élément de maintien qu'il souhaite,

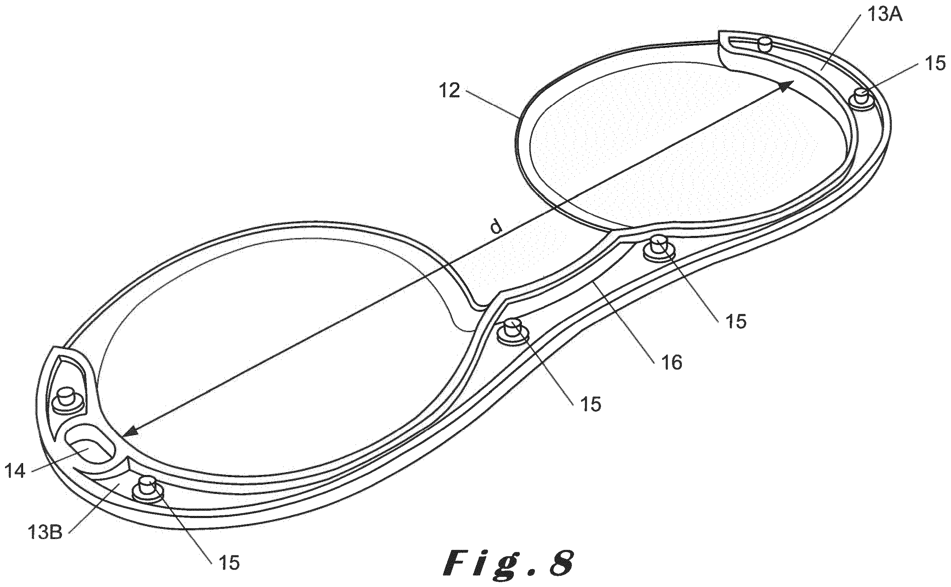

La figure 8 illustre l'intérieur d'une partie de l'étui 12 selon la présente invention,

La partie de l'étui illustré permet d'apercevoir l'intérieur de l'étui 12. La partie interne de l'étui 12 présente une première et une deuxième bordure 13A, 13B en forme d'arc de cercle et un élément de jonction 16 reliant lesdites première et deuxième bordures 13A, 13B l'une à l'autre, lesdites première et deuxième bordures 13A, 13B étant espacées l'une de l'autre par une distance d correspondant à la longueur de l'étui (12) et étant agencées pour maintenir ledit binocle (1) en deuxième position, lorsque ledit binocle (1) est logé dans ledit étui (12),

La partie interne de l'étui 12 présente également plusieurs protubérances 15 destinées à être logées dans des cavités d'une autre partie complémentaire à celle illustrée afin de former l'étui 12 selon l'invention.

Ainsi, lorsque l'étui 12 est utilisé avec le binocle 1 selon l'invention, le binocle 1 est maintenu en deuxième position pour pouvoir l'insérer dans l'étui 12. Ensuite, une fois inséré dans l'étui 12, le binocle 1 adopte automatiquement une position dans laquelle les premier et deuxième points d'inflexion s'éloignent sensiblement l'un de l'autre mais reste préférentiellement sous légère tension au niveau de la jonction 4.

De plus, il a été observé que les extrémités des première et deuxième lentilles 3A, 3B sont en butées contre l'épaisseur des première et deuxième bordures 13A, 13B de l'étui 12 lorsque le binocle 1 est logé dans l'étui 12. L'étui 12 selon l'invention fournit ainsi un espace délimité par l'épaisseur des première et deuxième bordures 13A, 13B de l'étui 12 selon l'invention. Cet espace étant dédié à l'insertion du binocle 1 selon l'invention de telle façon qu'une fois inséré dans l'étui 12 selon l'invention, le binocle 1 est suffisamment maintenu dans cet espace grâce notamment à sa flexibilité.

De plus, un étui 16 selon l'invention comprenant le binocle 1 avec l'élément de maintien 6 selon l'invention peuvent également être vendus ensemble ou séparément.

Le binocle 1 selon l'invention présente l'avantage de pouvoir être porté dans un sens comme dans l'autre sans affecter la dioptrie des lentilles du binocle 1 selon la présente invention.

La présente divulgation concerne aussi un procédé de fabrication d'un binocle par monoinjection d'un polymère dans un moule. Le procédé comprend les étapes suivantes :
- monoinjection d'un polymère dans un moule présentant un motif ayant la forme de deux lentilles reliées l'une à l'autre par une jonction pour former un binocle, et
- démoulage dudit binocle. La présente divulgation se rapporte à un procédé de moulage par mono-injection pour former le binocle 1 suivant l'invention, ledit procédé comprenant les étapes suivantes :
- monoinjection d'un polymère dans un moule dont le motif présente une première bordure munie d'une première lentille et une deuxième bordure munie d'une deuxième lentille, lesdites première et deuxième bordures étant prolongées l'une et l'autre par une jonction qui les relie l'une à l'autre, ladite jonction étant courbe et présentant un premier et un deuxième points d'inflexion pour former un binocle 1,
- démoulage dudit binocle 1.

De préférence, l'étape de monoinjection est réalisée par injection d'un polymère choisi dans le groupe constitué d'élastomères, de préférence du polycarbonate et du polyuréthane.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Ensemble comprenant :
- un binocle (1) moulé en une seule pièce comprenant une structure sensiblement plane qui présente une première bordure (2A) munie d'une première lentille (3A) et une deuxième bordure (2B) munie d'une deuxième lentille (3B), ladite structure présentant un plan (π) qui traverse lesdites première et deuxième bordures (2A, 2B) et lesdites première et deuxième lentilles (3A, 3B), lesdites première et deuxième bordures (2A, 2B) étant prolongées l'une et l'autre par une jonction (4) qui les relie l'une à l'autre, ladite jonction (4) étant agencée pour être en contact avec un élément de maintien (6) destiné à être posé sur le nez d'un utilisateur, ladite jonction (4) étant courbe et présentant un premier et un deuxième points d'inflexion (8, 9), ledit binocle présentant une première position prête à porter dans laquelle le binocle (1) est agencé pour être posé sur le nez d'un utilisateur et dans laquelle la jonction (4) est en position de repos où les premier et deuxième points d'inflexion (8, 9) sont éloignés l'un de l'autre et une deuxième position dans laquelle la jonction (4) est en position de tension où les premier et deuxième points d'inflexion (8, 9) sont rapprochés l'un de l'autre ;
- un élément de maintien (6) destiné à être fixer sur le binocle, présentant une forme courbe et comprenant un premier et un deuxième points (6F, 6G) d'inflexion ;
- un étui (12) destiné à contenir le binocle muni de l'élément de maintien, ledit étui présentant une première bordure et une deuxième bordure et un élément de jonction reliant lesdites première et deuxième bordures l'une à l'autre, lesdites première et deuxième bordures étant espacées l'une de l'autre par une distance d correspondant à la longueur de l'étui (12) et étant agencées pour maintenir ledit binocle (1) en deuxième position, lorsque ledit binocle (1) est logé dans ledit étui (12),
ledit ensemble étant **caractérisé en ce que**, lorsque le binocle (1) est logé dans l'étui (16), toute sa structure est logée dans l'étui (16) sauf la jonction (4) et l'élément de maintien (6) qui restent visibles.

2. Ensemble selon la revendication 1, dans lequel ladite jonction (4) présente d'un côté du premier point d'inflexion (8) une première partie de jonction (4A) et de l'autre côté du premier point d'inflexion (8) une deuxième partie de jonction (4B) et d'un côté du deuxième point d'inflexion (9), ladite deuxième partie de jonction (4B) et de l'autre côté du deuxième point d'inflexion (9) une troisième partie de jonction (4C), lesdites première et troisième parties (4A, 4C) de ladite jonction (4) présentant une concavité vers le haut, lorsque le binocle (1) est en position prête à porter.

3. Ensemble selon la revendication 1 ou 2, dans lequel ladite première bordure (2A) munie de la première lentille (3A) entoure partiellement ladite première lentille (3A) et dans lequel ladite deuxième bordure (2B) munie de la deuxième lentille (3B) entoure partiellement ladite deuxième lentille (3B), lesdites première et deuxième bordures (2A, 2B) présentant une épaisseur au moins supérieure à celle desdites première et deuxième lentilles.

4. Ensemble selon la revendication 2 ou 3, dans lequel ladite deuxième partie (4B) de ladite jonction (4) présente une concavité vers le bas.

5. Ensemble selon l'une des revendications 2 à 4, dans lequel les première et troisième parties (4A, 4C) de ladite jonction (4) présente chacune un rayon de courbure allant de 2 à 6 mm, de préférence de 3 à 5 mm, plus préférentiellement égal à 3 mm.

6. Ensemble selon l'une des revendications 2 à 5, dans lequel ladite deuxième partie (4B) de ladite jonction (4) présente un rayon de courbure allant de 1 à 3 cm, de préférence de 1 ,5 à 2,5 cm, plus préférentiellement de 1 ,5 à 2 cm

7. Ensemble selon l'une des revendications 1 à 6, dans lequel lesdites première et deuxième lentilles (3A, 3B) ou les première et deuxième bordures sont chacune munies de moyens de liaison (7) agencés pour engager ledit élément de maintien (6) audit binocle (1).

8. Ensemble selon la revendication 7, dans lequel ledit lesdits moyens de liaison (7) sont choisis dans le groupe constitué d'ailettes, de protubérances, de préférence de protubérances rigides, comme des protubérances présentant la forme de boutons ou de champignons et de leurs combinaisons.

9. Ensemble selon l'une quelconque des revendications précédentes, dans lequel le binocle (1) est en matière choisie dans le groupe constitué d'élastomères, de préférence du polycarbonate, du polyuréthane, du verre ou de leurs combinaisons,

10. Ensemble selon l'une quelconque des revendications précédentes, dans lequel ladite jonction (4) présente une largeur comprise entre 1 et 8 mm et une épaisseur comprise entre 0,05 et 1 ,5 mm.

11. Ensemble selon l'une quelconque des revendications précédentes, dans lequel l'élément de maintien (6) présente d'un côté du premier point d'inflexion (6F) une première partie (6A) et de l'autre côté du premier point d'inflexion (6F) une deuxième partie (6B) et d'un côté du deuxième point d'inflexion (6G) ladite deuxième partie (4B), et de l'autre côté du deuxième point d'inflexion (6G) une troisième partie (6C), lesdites première et troisième parties (6A, 6C) présentant une concavité vers le haut et ladite deuxième partie (6B) une concavité vers le bas.

12. Ensemble selon l'une quelconque des revendications précédentes, dans lequel l'élément de maintien (6) comprend 5 parties courbes (6A-6E) où les première, deuxième et troisième parties (6A-6C) sont agencées pour être respectivement en contact avec les première, deuxième et troisième parties (4A-4C) de la jonction (4) du binocle (1) et où les quatrième et cinquième parties (6D-6E) sont agencées pour être fixées audit binocle (1) au moyen desdits moyens de liaisons (7).

13. Ensemble selon l'une quelconque des revendications précédentes, dans lequel l'élément de maintien est fait en matière choisie dans le groupe constitué d'élastomères, de préférence du polycarbonate, du polyuréthane, du silicone, plus préférentiellement d'élastomères thermoplastiques ou de leurs combinaisons.

14. Ensemble selon l'une quelconque des revendications précédentes, dans lequel la longueur dudit étui (12) est inférieure ou égale à celle du binocle (1) en première position de telle façon que, lorsque le binocle en première position adopte la deuxième position, celui-ci peut être inséré dans ledit étui.

## Patentansprüche

1. Einheit, umfassend:
- einen Kneifer (1), der aus einem einzigen Stück geformt ist, umfassend eine im Wesentlichen ebene Struktur, die eine erste Umrandung (2A), die mit einer ersten Linse (3A) versehen ist, und eine zweite Umrandung (2B), die mit einer zweiten Linse (3B) versehen ist, aufweist, wobei die Struktur eine Ebene (Π) aufweist, die die erste und zweite Umrandung (2A, 2B) und die erste und zweite Linse (3A, 3B) quert, wobei die erste und zweite Umrandung (2A, 2B), die eine und die andere, durch eine Verbindungsstelle (4) verlängert sind, die sie miteinander verbindet, wobei die Verbindungsstelle (4) angeordnet ist, um in Kontakt mit einem Halteelement (6) zu sein, das dazu bestimmt ist, auf die Nase eines Nutzers gesetzt zu werden, wobei die Verbindungsstelle (4) gekrümmt ist und einen erste und eine zweite Biegungsstelle (8, 9) aufweist, wobei der Kneifer eine erste tragebereite Position aufweist, in der der Kneifer (1) angeordnet ist, um auf die Nase eines Nutzers gesetzt zu werden, und in der die Verbindungsstelle (4) in Ruheposition ist, wo die erste und zweite Biegungsstelle (8, 9) voneinander entfernt sind, und eine zweite Position, in der die Verbindungsstelle (4) in Spannungsposition ist, wo die erste und zweite Biegungsstelle (8, 9) einander angenähert sind;
- ein Halteelement (6), das dazu bestimmt ist, an dem Kneifer befestigt zu werden, das eine gekrümmte Form aufweist und eine erste und eine zweite Biegungsstelle (6F, 6G) umfasst;
- ein Etui (12), das dazu bestimmt ist, den mit dem Halteelement versehenen Kneifer zu enthalten, wobei das Etui eine erste Umrandung und eine zweite Umrandung und ein Verbindungsstellenelement aufweist, das die erste und zweite Umrandung miteinander verbindet, wobei die erste und zweite Umrandung um eine Distanz d voneinander beabstandet sind, die der Länge des Etuis (12) entspricht, und angeordnet sind, um den Kneifer (1) in zweiter Position zu halten, wenn der Kneifer (1) in dem Etui (12) untergebracht ist,
wobei die Einheit **dadurch gekennzeichnet ist, dass** wenn der Kneifer (1) in dem Etui (16) untergebracht ist, seine gesamte Struktur, mit Ausnahme der Verbindungsstelle (4) und des Halteelements (6), die sichtbar bleiben, in dem Etui (16) untergebracht ist.

2. Einheit nach Anspruch 1, wobei die Verbindungsstelle (4) auf der einen Seite der ersten Biegungsstelle (8) einen ersten Verbindungsstellenteil (4A) und auf der anderen Seite der ersten Biegungsstelle (8) einen zweiten Verbindungsstellenteil (4B) aufweist, und auf einer Seite der zweiten Biegungsstelle (9) einen dritten Verbindungsstellenteil (4C), wobei der erste und dritte Teil (4A, 4C) der Verbindungsstelle (4) eine Konkavität nach oben aufweisen, wenn der Kneifer (1) in tragebereiter Position ist.

3. Einheit nach Anspruch 1 oder 2, wobei die erste Umrandung (2A), die mit der ersten Linse (3A) versehen ist, die erste Linse (3A) teilweise umgibt, und wobei die zweite Umrandung (2B), die mit der zweiten Linse (3B) versehen ist, die zweite Linse (3B) teilweise umgibt, wobei die erste und zweite Umrandung (2A, 2B) eine Dicke mindestens größer als jene der ersten und zweiten Linse aufweisen.

4. Einheit nach Anspruch 2 oder 3, wobei der zweite Teil (4B) der Verbindungsstelle (4) eine Konkavität nach unten aufweist.

5. Einheit nach einem der Ansprüche 2 bis 4, wobei der erste und dritte Teil (4A, 4C) der Verbindungsstelle (4) jeweils einen Krümmungsradius aufweist, der von 2 bis 6 mm, vorzugsweise von 3 bis 5 mm reicht, besonders bevorzugt gleich 3 mm ist.

6. Einheit nach einem der Ansprüche 2 bis 5, wobei der zweite Teil (4B) der Verbindungsstelle (4) einen Krümmungsradius aufweist, der von 1 bis 3 cm, vorzugsweise von 1,5 bis 2,5 cm, besonders bevorzugt von 1,5 bis 2 cm reicht.

7. Einheit nach einem der Ansprüche 1 bis 6, wobei die erste und zweite Linse (3A, 3B) oder die erste und zweite Umrandung jeweils mit Bindungsmitteln (7) versehen sind, die angeordnet sind, um das Halteelement (6) in den Kneifer (1) einzuführen.

8. Einheit nach Anspruch 7, wobei die Verbindungsmittel (7) aus der Gruppe ausgewählt sind, die aus Flügeln, Vorsprüngen, vorzugsweise starren Vorsprüngen, wie Vorsprüngen gebildet ist, die die Form von Knöpfen oder Pilzen und deren Kombinationen aufweisen.

9. Einheit nach einem der vorstehenden Ansprüche, wobei der Kneifer (1) aus einem Material gefertigt ist, das aus der Gruppe ausgewählt ist, die aus Elastomeren, vorzugsweise Polycarbonat, Polyurethan, Glas oder deren Kombinationen gebildet ist.

10. Einheit nach einem der vorstehenden Ansprüche, wobei die Verbindungsstelle (4) eine Breite aufweist, die zwischen 1 und 8 mm enthalten ist, und eine Dicke, die zwischen 0,05 und 1,5 mm enthalten ist.

11. Einheit nach einem der vorstehenden Ansprüche, wobei das Halteelement (6) auf der einen Seite der ersten Biegungsstelle (6F) einen ersten Teil (6A), und auf der anderen Seite der ersten Biegestelle (6F) einen zweiten Teil (6B) aufweist, und auf der einen Seite der zweiten Biegestelle (6G) den zweiten Teil (4B), und auf der anderen Seite der zweiten Biegestelle (6G) einen dritten Teil (6C), wobei der erste und dritte Teil (6A, 6C) eine Konkavität nach oben, und der zweite Teil (6B) eine Konkavität nach unten aufweisen.

12. Einheit nach einem der vorstehenden Ansprüche, wobei das Halteelement (6) 5 gekrümmte Teile (6A-6E) umfasst, wo der erste, zweite und dritte Teil (6A-6C) angeordnet sind, um jeweils in Kontakt mit dem ersten, zweiten und dritten Teil (4A-4C) der Verbindungsstelle (4) des Kneifers (1) zu sein, und wo der vierte und fünfte Teil (6D-6E) angeordnet sind, um anhand der Bindungsmittel (7) an dem Kneifer (1) befestigt zu werden.

13. Einheit nach einem der vorstehenden Ansprüche, wobei das Halteelement aus einem Material gefertigt ist, das aus der Gruppe ausgewählt ist, die aus Elastomeren, vorzugsweise Polycarbonat, Polyurethan, Silikon, bevorzugter aus thermoplastischen Elastomeren oder deren Kombinationen gebildet ist.

14. Einheit nach einem der vorstehenden Ansprüche, wobei die Länge des Etuis (12) kleiner oder gleich jener des Kneifers (1) in erster Position ist, sodass, wenn der Kneifer in erster Position die zweite Position einnimmt, dieser in das Etui eingeführt werden kann.

## Claims

1. Assembly comprising:
- a pince-nez (1) moulded in one piece and comprising a substantially planar structure which has a first rim (2A) provided with a first lens (3A) and a second rim (2B) provided with a second lens (3B), said structure having a plane (n) which passes through said first and second rims (2A, 2B) and said first and second lenses (3A, 3B), said first and second rims (2A, 2B) each being extended by a linkage (4) which connects them together, said linkage (4) being arranged to be in contact with a holding element (6) intended to be placed on the nose of a user, said linkage (4) being curved and having a first and a second point of inflexion (8, 9), said pince-nez having a first ready-to-wear position wherein the pince-nez (1) is arranged to be placed on the nose of a user and wherein the linkage (4) is in the idle position where the first and second points of inflexion (8, 9) are distant from each other and a second position wherein the linkage (4) is in a tension position wherein the first and second points of inflexion (8, 9) are close to each other;
- a holding element (6) intended to be secured to the pince-nez, having a curved shape and comprising a first and a second point of inflexion (6F, 6G);
- a case (12) intended to contain the pince-nez, provided with the holding element, said case having a first rim and a second rim and a linkage element connecting said first and second rims to each other, said first and second rims being spaced apart from each other by a distance d corresponding to the length of the case (12) and being arranged to hold said pince-nez (1) in the second position, when said pince-nez (1) is housed in said case (12),
said assembly being **characterised in that**, when the pince-nez (1) is housed in the case (16), the entire structure thereof is housed in the case (16) except for the linkage (4) and the holding element (6), which remain visible.

2. Assembly according to claim 1, wherein said linkage (4) has on one side of the first point of inflexion (8) a first linkage portion (4A) and on the other side of the first point of inflexion (8) a second linkage portion (4B) and on one side of the second point of inflexion (9), said second linkage portion (4B) and on the other side of the second point of inflexion (9) a third linkage portion (4C), said first and second portions (4A, 4C) of said linkage (4) having an upwards concavity, when the pince-nez (1) is in the ready-to-wear position.

3. Assembly according to claim 1 or 2, wherein said first rim (2A) provided with the first lens (3A) partially surrounds said first lens (3A), and wherein said second rim (2B) provided with the second lens (3B) partially surrounds said second lens (3B), said first and second rims (2A, 2B) having a thickness at least greater than that of said first and second lenses.

4. Assembly according to claim 2 or 3, wherein said second portion (4B) of said linkage (4) has a downwards concavity.

5. Assembly according to one of claims 2 to 4, wherein the first and second portions (4A, 4C) of said linkage (4) each has a radius of curvature ranging from 2 to 6 mm, preferably from 3 to 5 mm, more preferentially equal to 3 mm.

6. Assembly according to one of claims 2 to 5, wherein said second portion (4B) of said linkage (4) has a radius of curvature ranging from 1 to 3 cm, preferably from 1.5 to 2.5 cm, more preferentially from 1.5 to 2 cm.

7. Assembly according to one of claims 1 to 6, wherein said first and second lenses (3A, 3B) or the first and second rims are each provided with connection means (7) arranged to engage said holding element (6) to said pince-nez (1).

8. Assembly according to claim 7, wherein said connection means (7) are selected from the group consisting of fins or protuberances, preferably rigid protuberances, such as protuberances in the form of buttons or mushrooms and combinations thereof.

9. Assembly according to any one of the preceding claims, wherein the pince-nez (1) is made from a material selected from the group consisting of elastomers, preferably polycarbonate, polyurethane, glass or combinations thereof.

10. Assembly according to any one of the preceding claims, wherein said linkage (4) has a width of between 1 and 8 mm and a thickness of between 0.05 and 1.5 mm.

11. Assembly according to any one of the preceding claims, wherein the holding element (6) comprises a first portion (6A) on one side of the first point of inflection (6F), and a second portion (6B) on the other side of the first point of inflection (6F), and said second portion (4B) on one side of the second point of inflection (6G), and a third portion (6C) on the other side of the second point of inflection (6G), said first and third portions (6A, 6C) having an upwards concavity and said second portion (6B) having a downwards concavity.

12. Assembly according to any one of the preceding claims, wherein the holding element (6) comprises 5 curved portions (6A-6E), whereby the first, second and third portions (6A-6C) are arranged so that they are in contact with respectively the first, second and third portions (4A-4C) of the linkage (4) of the pince-nez (1) and whereby the fourth and fifth portions (6D-6E) are arranged so that they are secured to the pince-nez (1) by means of said connection means (7).

13. Assembly according to any one of the preceding claims, wherein the holding element is made from material selected from the group consisting of elastomers, preferably polycarbonate, polyurethane and silicone, more preferentially thermoplastic elastomers or combinations thereof.

14. Assembly according to any one of the preceding claims, wherein the length of said case (12) is less than or equal to that of the pince-nez (1) in the first position so that, when the pince-nez in the first position adopts the second position, it can be inserted in said case.
